# FASCICULE DE BREVET EUROPEEN

(11) **EP 3 360 987 B1**
(45) Date de publication et mention de la délivrance du brevet: **01.07.2020**
(21) Numéro de dépôt: 18156083.0
(22) Date de dépôt: 09.02.2018
(51) Int. Cl.: C25B 13/02, C25B 13/04, F16J 15/08, F16J 15/12, C25B 9/20

(54) **ENTRETOISE D'ELECTROLYSEUR ET ELECTROLYSEUR ÉQUIPE D'UNE TELLE ENTRETOISE**
ABSTANDHALTER FÜR ELEKTROLYSEGERÄT, UND MIT EINEM SOLCHEN ABSTANDHALTER AUSGESTATTETES ELEKTROLYSEGERÄT
ELECTROLYSER SPACER AND ELECTROLYSER PROVIDED WITH SUCH A SPACER

(30) Priorité: 14.02.2017 FR 1751195
(43) Date de publication de la demande: 15.08.2018
(73) Titulaire: AREVA H2Gen, 75008 Paris (FR)
(72) Inventeur: LARIDANT, François, 92340 Bourg la Reine (FR); GERNOT, Eric, 91310 Montlhéry (FR); AUPRETRE, Fabien, 91380 Chilly Mazarin (FR)
(74) Mandataire: Cabinet Netter

(56) Documents cités:
- EP-A1- 0 629 015
- EP-A1- 3 012 892
- WO-A1-2005/028710
- WO-A2-2015/004378
- DE-T5-112014 005 208
- DE-T5-112014 005 208

## Description

L'invention concerne une cellule d'électrolyse et une entretoise pour une telle cellule.

Pour produire industriellement de l'hydrogène de manière décentralisée et écologique, l'électrolyse de l'eau est préférée au reformage. Les dispositifs électrolyseurs actuels comprennent une pluralité de cellules électrochimiques, alimentées en eau, et comprenant chacune une paire d'électrodes. Pour des raisons de coût et d'encombrement notamment, les cellules sont généralement plates et regroupées en un ou plusieurs empilements, ou *"stack"* en anglais, de sorte que deux cellules superposées présentent à chaque fois une électrode commune.

Pour diminuer les coûts, liés notamment à la fabrication et au fonctionnement des empilements, on cherche d'une manière générale à maximiser le nombre de cellules par empilement. En appliquant un courant continu entre l'anode et la cathode de chaque cellule, au moyen d'un générateur dont la tension de sortie peut être réglable, on provoque la réaction d'électrolyse de l'eau. Du dihydrogène (H2) et du dioxygène (O₂) sont ainsi produits.

La Demanderesse a proposé des joints qui permettent d'empiler un grand nombre de cellules, par exemple jusqu'à 300 cellules. Les cellules sont capables de supporter des forces de serrage importantes et des pressions internes d'environ 45 bars. De tels joints donnent satisfaction et sont par exemple décrits dans WO 2015/004378.

Lorsque de tels joints sont utilisés sous des pressions encore plus élevées et/ou avec des différences de pression importantes entre deux compartiments d'une même cellule, des déformations peuvent apparaître. En outre, les joints décrits dans WO 2015/004378, montés par paire pour chaque cellule, nécessitent un assemblage minutieux de la cellule sous peine de dysfonctionner.

L'invention vient améliorer la situation.

La Demanderesse propose une entretoise selon la revendication 1, pour une cellule d'électrolyseur, de forme sensiblement annulaire et comprenant : une partie périphérique présentant deux faces principales parallèles et opposées l'une par rapport à l'autre, la distance séparant les deux faces principales définissant une épaisseur de l'entretoise, et une partie interne présentant une épaisseur strictement inférieure à l'épaisseur de l'entretoise, la partie périphérique et la partie interne étant d'un seul tenant et reliées l'une à l'autre en formant un épaulement annulaire interne de sorte que la partie interne présente une face intermédiaire sensiblement annulaire et s'étendant selon un plan parallèle aux deux faces principales de la partie périphérique et situé entre les deux faces principales.

L'entretoise présente en outre les caractéristiques suivantes :
- la partie interne présente en outre une face d'appui sensiblement plane, annulaire et coplanaire avec l'une des deux faces principales de la partie périphérique,
- l'entretoise comprend une âme métallique et une enveloppe électriquement isolante recouvrant l'âme au moins sur les zones de l'entretoise en contact avec un espace interne de la cellule d'électrolyseur à l'état monté,
- au moins une rainure est ménagée dans l'âme, s'étendant sensiblement selon la circonférence de l'entretoise, et dans l'une au moins parmi les deux faces principales et la face intermédiaire, l'au moins une rainure formant logement pour une ligne d'étanchéité à l'état monté de l'entretoise,
- l'enveloppe présente au moins une nervure, s'étendant sensiblement selon la circonférence de l'entretoise, et faisant saillie, à l'état au repos de l'entretoise, de l'une au moins parmi les deux faces principales et la face intermédiaire, l'au moins une nervure formant ligne d'étanchéité à l'état monté de l'entretoise.

Selon un second aspect de l'invention, la Demanderesse propose une cellule d'électrolyse comprenant deux électrodes sensiblement planes et parallèles l'une par rapport à l'autre, une membrane et une pièce sensiblement annulaire formant entretoise entre les deux électrodes selon une direction d'empilement, les deux électrodes et l'entretoise délimitant ensemble un espace interne de la cellule.

L'entretoise comprend une partie périphérique présentant deux faces principales opposées l'une par rapport à l'autre et en appui respectif contre l'une et l'autre des deux électrodes, la distance séparant les deux faces principales définissant une épaisseur de la partie périphérique correspondant à l'épaisseur de l'espace interne de la cellule selon la direction d'empilement, et une partie interne présentant une épaisseur strictement inférieure à l'épaisseur de la partie périphérique, la partie périphérique et la partie interne étant d'un seul tenant et reliées l'une à l'autre en formant un épaulement annulaire interne de sorte que la partie interne présente une face intermédiaire sensiblement annulaire en regard et à distance de l'une des deux électrodes, la face intermédiaire supportant la membrane de sorte que la membrane divise l'espace interne de la cellule en deux compartiments.

D'autres caractéristiques, détails et avantages de l'invention apparaîtront à la lecture de la description détaillée ci-après, et des dessins annexés, sur lesquels :
- la figure 1 est une représentation schématique de cellules d'électrolyse de l'eau au sein d'une pile,
- la figure 2 est une représentation schématique du fonctionnement d'une cellule d'électrolyse selon l'invention,
- la figure 3 est une vue éclatée en perspective d'une cellule d'électrolyse selon l'invention.
- la figure 4 est une vue d'une face d'une entretoise selon l'invention,
- la figure 5 est une vue de la face opposée à celle visible en figure 4,
- la figure 6 est une vue schématique de la coupe VI représentée en figures 4 et 5,
- la figure 7 est une vue schématique de la coupe VII représentée en figures 4 et 5,
- la figure 8 est une vue schématique de la coupe VIII représentée en figures 4 et 5, et
- la figure 9 est une vue schématique et partielle de la coupe de la figure 6 à l'état monté dans une cellule.

Dans la suite, les termes *"anode", "cathode"* et leurs dérivés sont utilisés conformément à ce qui est représenté sur les figures. Néanmoins, les structures d'électrolyseur proposées peuvent fonctionner de manière inversée par rapport à ce qui est représenté. Par exemple, en inversant la polarisation et en échangeant les affectations des entrées et sorties de fluide, le compartiment anodique peut devenir le compartiment cathodique et inversement. Sauf mention contraire, les exemples de dimensions donnés ci-après sont des valeurs nominales à l'état au repos des pièces.

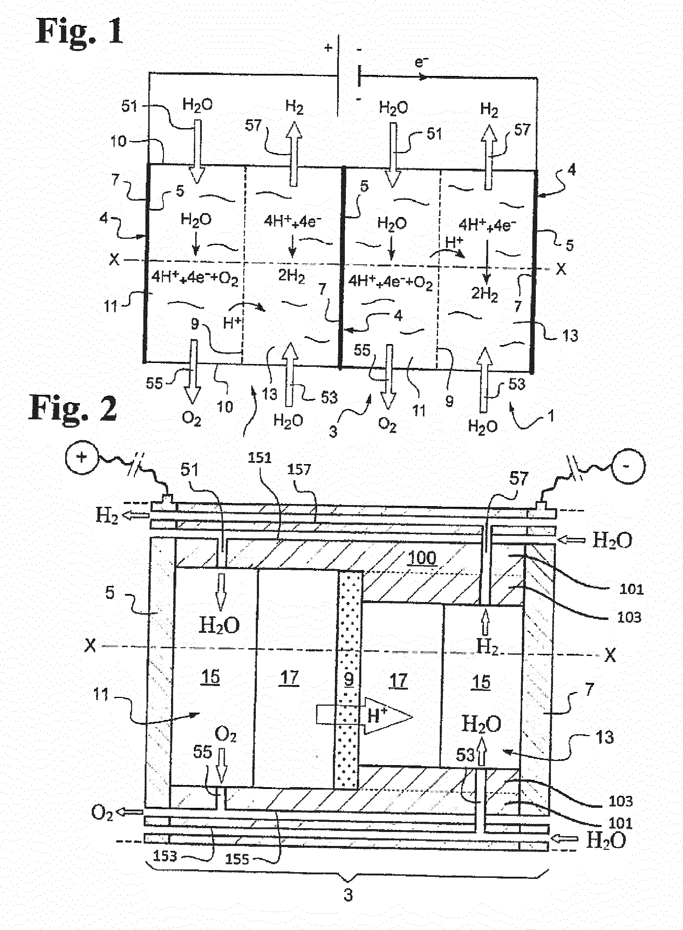

Il est fait référence à la figure 1, qui illustre l'aspect électrochimique d'une pile d'électrolyseur.

Une pile d'électrolyseur 1 comprend une pluralité de cellules 3 d'électrolyse de l'eau empilées les unes sur les autres selon une direction d'empilement XX. Seules deux cellules 3 sont représentées en figure 1.

Chaque cellule 3 comprend une paire d'électrodes 5, 7, une membrane d'échange protonique 9, ou membrane PEM pour *"proton exchange membrane"* en anglais, et une paroi externe 10.

Les deux électrodes 5, 7 sont chacune formée d'une plaque bipolaire 4. Une plaque bipolaire 4 comprend deux faces opposées l'une par rapport à l'autre. Une première face forme une anode 5 d'une première cellule 3, tandis qu'une seconde face forme une cathode 7 d'une seconde cellule 3 adjacente à la première cellule 3. À l'exception des extrémités de la pile 1, chaque plaque bipolaire 4 est disposée à l'interface de deux cellules 3 adjacentes.

Les deux plaques bipolaires 4 formant les électrodes 5, 7 d'une cellule 3 sont de forme sensiblement plane. Les électrodes 5, 7 sont installées de manière sensiblement parallèle l'une par rapport à l'autre et perpendiculaires à la direction d'empilement XX. Les deux électrodes 5, 7 sont, ici, de structures et de compositions identiques. En variante, les plaques bipolaires 4 peuvent être adaptées en fonction de leur fonction. Par exemple, des revêtements peuvent être prévus pour protéger chimiquement les électrodes 5, 7 du contenu des compartiments anodique et cathodique.

La membrane PEM 9 est disposée entre les deux électrodes 5, 7 et sensiblement parallèle aux électrodes 5, 7.

L'espace entre l'anode 5 et la membrane PEM 9 définit un compartiment anodique 11. L'espace entre la cathode 7 et la membrane PEM 9 définit un compartiment cathodique 13. Le compartiment anodique 11 et le compartiment cathodique 13 contiennent chacun de l'eau. De préférence, de l'eau dé-ionisée est utilisée. Par exemple, l'eau présente une conductivité inférieure à 1µS.cm⁻².

La paroi externe 10 s'étend sensiblement selon la direction d'empilement XX et délimite le compartiment anodique 11 et le compartiment cathodique 13. Une première entrée d'eau 51 est ménagée à travers la paroi externe 10 de manière à déboucher dans le compartiment anodique 11. Une seconde entrée d'eau 53 est ménagée à travers la paroi externe 10 de manière à déboucher dans le compartiment cathodique 13. Une sortie 55 du compartiment anodique 11 est ménagée à travers la paroi externe 10. La sortie 55 du compartiment anodique 11 prend la forme d'un passage adapté pour évacuer de l'eau chargée en dioxygène (O₂) sous forme gazeuse. Une sortie 57 du compartiment cathodique 13 est ménagée à travers la paroi externe 10. La sortie 57 du compartiment cathodique 13 prend la forme d'un passage adapté pour évacuer de l'eau chargée en dihydrogène (H2) sous forme gazeuse.

L'application d'une tension électrique entre l'anode 5 et la cathode 7 alimente les réactions d'électrolyse. Dans le compartiment anodique 11, la réaction (1) suivante a lieu :

2H₂O → 4H⁺ + 4e⁻ + O₂ (1)

Les protons (H⁺) issus de la réaction (1) dans le compartiment anodique 11 migrent au travers de la membrane PEM 9 jusque dans le compartiment cathodique 13. Dans le compartiment cathodique 13, la réaction (2) suivante a lieu :

4H⁺ + 4e⁻ → 2H₂ (2)

Les réactions (1) et (2) au sein de la pile d'électrolyse 1 sont contrôlées en ajustant le courant continu ou la tension appliquée aux électrodes 5, 7.

L'anode 5 et la cathode 7 aux extrémités respectives de la pile d'électrolyse 1, sont destinées à être reliées à un générateur de courant continu. Les raccords électriques et la source de courant commune aux cellules 3 de la pile 1 ne sont pas représentés.

La première entrée d'eau 51, la seconde entrée d'eau 53, la sortie 55 de dioxygène (O₂) et la sortie 57 de dihydrogène (H2) de chaque cellule 3 de la pile 1 peuvent être reliées fluidiquement aux entrées/sorties homologues des autres cellules 3 de la pile 1. Ainsi, les premières entrées d'eau 51 de la pile 1 sont alimentées par une source d'eau commune, les secondes entrées d'eau 53 de la pile 1 sont alimentées par une source d'eau commune, les sorties de dioxygène (O₂) de la pile 1 sont reliées à un collecteur commun et les sorties de dihydrogène (H2) de la pile 1 sont reliées à un collecteur commun.

Les secondes entrées d'eau 53 améliorent la régulation thermique et limitent l'assèchement de la membrane PEM 9. En variante, les secondes entrées d'eau 53 sont omises du côté de la cathode 7.

Il est maintenant fait référence à la figure 2, qui illustre l'aspect mécanique et fluidique d'une cellule d'électrolyse 3. La cellule 3 comprend les deux plaques bipolaires 4, l'une formant anode 5 tandis que l'autre forme cathode 7, une pièce formant entretoise 100, la membrane PEM 9, deux diffuseurs de courant 15, ci-après diffuseurs 15, et deux collecteurs de courant poreux 17, ci-après collecteurs 17.

L'entretoise 100 est maintenue entre l'anode 5 et la cathode 7 selon la direction d'empilement XX. L'anode 5, la cathode 7 et l'entretoise 100 délimitent ensemble un espace interne de la cellule 3, à l'intérieur de l'entretoise 100. La membrane PEM 9 est disposée dans l'espace interne de la cellule 3 de manière à délimiter les compartiments anodique 11 et cathodique 13. Chacun des deux compartiments 11, 13 est occupé respectivement par un diffuseur 15 et un collecteur 17. Chaque compartiment anodique 11 et compartiment cathodique 13 loge un diffuseur 15 du côté de l'anode 5, respectivement la cathode 7, et un collecteur 17 du côté de la membrane PEM 9. La membrane PEM 9 est disposée, ou prise en sandwich, entre les deux collecteurs 17.

Pour une cellule 3, on trouve donc selon la direction d'empilement XX dans l'espace interne et dans cet ordre :
- la plaque bipolaire 4 formant anode 5,
- le diffuseur 15 dans le compartiment anodique 11,
- le collecteur 17 dans le compartiment anodique 11,
- la membrane PEM 9,
- le collecteur 17 dans le compartiment cathodique 13,
- le diffuseur 15 dans le compartiment cathodique 13, et
- la plaque bipolaire 4 formant cathode 7.

L'entretoise 100 est de forme sensiblement annulaire de manière à séparer l'espace interne de l'extérieur de la cellule 3. L'entretoise 100 forme ici la paroi externe 10 de la cellule 3. L'entretoise 100 forme en outre un isolant électrique entre l'anode 5, la cathode 7 et la membrane PEM 9.

Le compartiment anodique 11 et le comportement cathodique 13, respectivement les deux diffuseurs 15, et respectivement les deux collecteurs 17, sont similaires deux à deux mais de dimensions différentes. Les deux plaques bipolaires 4 sont identiques. Dans des variantes, les parties homologues de part et d'autre de la membrane PEM 9 présentent, outre leurs dimensions, des différences mineures.

À l'état assemblé de la cellule 3, la face formant anode 5 de la première plaque bipolaire 4 et la face formant cathode 7 de la seconde plaque bipolaire 4 sont respectivement en appui de part et d'autre de l'entretoise 100 selon la direction d'empilement XX. L'entretoise 100 maintient l'écart entre les deux plaques bipolaires 4 selon la direction d'empilement XX. Ici, la membrane PEM 9 est en appui contre l'entretoise 100 du côté cathodique et en appui contre l'empilement du collecteur 17, du diffuseur 15 et de l'anode 5 du côté anodique. La direction d'empilement XX correspond aussi à une direction de serrage et à une direction d'épaisseur des plaques bipolaires 4, de l'entretoise 100, de la membrane PEM 9, des diffuseurs 15 et des collecteurs 17.

Les dimensions de la membrane PEM 9, des diffuseurs 15 et des collecteurs 17 sont ajustées de manière à sensiblement remplir la cellule 3. Le serrage de l'entretoise 100 entre l'anode 5 et la cathode 7 assure l'étanchéité de la cellule 3 et les contacts électriques entre les diffuseurs 15, les collecteurs 17 et les plaques bipolaires 4. Le compartiment anodique 11 et le compartiment cathodique 13 sont isolés fluidiquement de l'extérieur de la cellule 3.

La première entrée d'eau 51, la seconde entrée d'eau 53, la sortie 55 de dioxygène (O₂) et la sortie 57 de dihydrogène (H2) de la cellule 3 sont reliées respectivement à un premier canal d'alimentation en eau 151, un seconde canal d'alimentation en eau 153, un canal d'évacuation de dioxygène (O₂) 155 et un canal d'évacuation de dihydrogène (H2) 157 commun aux autres cellules 3 de la pile 1 non représentées en figure 2.

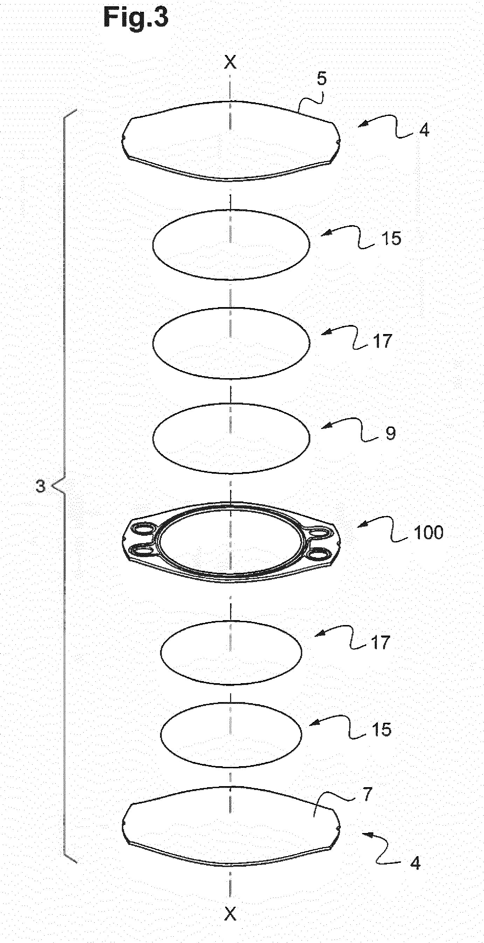

Il est maintenant fait référence à la figure 3. Dans le mode de réalisation décrit ici, la membrane PEM 9 présente une forme de disque. Son diamètre est ici d'environ 298 millimètres. Son épaisseur est comprise entre environ 0,05 et 0,3 millimètre.

Les plaques bipolaires 4 prennent la forme de plaques planes généralement circulaires. Les plaques bipolaires 4 présentent chacune un bord extérieur correspondant à la forme de l'entretoise 100. En variante, le bord externe de l'anode 5 et/ou le bord externe de la cathode 7 présentent un connecteur pour une connexion à la source de courant. L'anode 5 et la cathode 7 sont réalisées en un matériau électriquement conducteur, par exemple du titane.

Les diffuseurs 15 sont électriquement conducteurs. Les diffuseurs 15 comprennent des passage pour les fluides selon une ou plusieurs directions sensiblement perpendiculaires à la direction d'épaisseur, c'est-à-dire perpendiculaires à la direction d'empilement XX à l'état monté.

Dans l'exemple décrit ici, les diffuseurs 15 prennent la forme de grilles en forme de disque. En variante, les diffuseurs 15 peuvent prendre d'autres formes adaptées pour homogénéiser la circulation des fluides dans les compartiments anodique 11 et cathodique 13. Le diamètre est, ici, d'environ 280 millimètres dans le compartiment anodique 11 tandis qu'il est d'environ 265 millimètres dans le compartiment cathodique 13. L'épaisseur est comprise entre environ 0,9 et 1,2 millimètre. Les diffuseurs 15 sont réalisés en un matériau électriquement conducteur, par exemple à base de titane. Les diffuseurs 15 prennent ici la forme de grilles dont le maillage est agencé pour qu'une circulation de fluide dans la direction du plan principal du diffuseur 15 soit la plus homogène possible en s'étendant dans les directions du plan. Par exemple, les mailles forment un losange de 4,5 sur 2,7 millimètres.

En variante, les diffuseurs 15 peuvent être réalisés au moyen d'un ensemble de canaux ménagés dans l'anode 5 d'une part et dans la cathode 7 d'autre part.

Dans encore une autre variante, le diffuseur 15 est omis du côté de la cathode 7. Cette variante est préférée lorsque les secondes entrées d'eau 53 sont omises et que la circulation d'eau dans le compartiment cathodique 13 n'est pas prévue. Dans ce cas notamment, les dimensions peuvent être adaptées. Par exemple, les épaisseurs du côté cathode peuvent être réduites.

Les collecteurs 17 sont électriquement conducteurs. Les collecteurs 17 sont finement poreux de sorte que les échanges de fluides liquides et gazeux sont permis au travers des collecteurs 17 selon une ou plusieurs directions sensiblement parallèles à leur direction d'épaisseur, c'est-à-dire parallèles à la direction d'empilement XX à l'état monté.

Dans l'exemple décrit ici, les collecteurs 17 présentent une forme de disque. Leur diamètre est ici d'environ 280 millimètres dans le compartiment anodique 11 tandis qu'il est d'environ 265 millimètres dans le compartiment cathodique 13. L'épaisseur est comprise entre 1,3 et 1,8 millimètre. En variante, notamment en l'absence de circulation d'eau dans le compartiment cathodique 13, les épaisseurs peuvent être inférieures du côté cathode. Les collecteurs 17 sont réalisés en un matériau électriquement conducteur et perméable aux liquides, par exemple du titane fritté et poreux.

Les formes et dimensions extérieures des diffuseurs 15 et des collecteurs 17 correspondent aux formes et dimensions intérieures de l'entretoise 100 à l'intérieur de laquelle les diffuseurs 15 et les collecteurs 17 sont logés. Un jeu de montage est prévu pour permettre des dilatations des diffuseurs 15, des collecteurs 17 et de l'entretoise 100 en fonctionnement. Le diamètre de la membrane PEM 9 est inférieur au diamètre intérieur de l'entretoise 100 du côté anodique et supérieur au diamètre intérieur de l'entretoise 100 du côté cathodique. Ainsi, la membrane PEM 9 vient en appui contre l'épaulement annulaire interne de l'entretoise 100 représenté en figure 2 et qui sera décrit plus en détail par la suite. Les plaques bipolaires 4 présentent quant à elles des formes et dimensions adaptées pour venir s'appuyer contre l'entretoise 100.

Dans l'exemple décrit ici, l'anode 5, la cathode 7, les deux diffuseurs 15 et les deux collecteurs 17 de la cellule 3 sont en forme générale de disque. L'entretoise 100 présente un contour généralement circulaire correspondant. Les formes sensiblement axisymétriques facilitent la tenue à la pression ainsi qu'une répartition homogène des fluides dans les cellules 3. Les formes circulaires restent optionnelles. En variante, l'entretoise 100 peut présenter une forme sensiblement annulaire, c'est-à-dire un contour fermé et évidé en son centre, tout en présentant des bords interne et externe non circulaires vue selon la direction d'empilement XX, par exemple rectangulaires, carrés ou toute autre forme fermée adaptée. De même, l'anode 5, la cathode 7, les deux diffuseurs 15 et les deux collecteurs 17 de la cellule 3 peuvent présenter des formes en correspondance de celle de l'entretoise 100 et non circulaires. En outre, les dimensions données ci-dessus à titre d'exemple peuvent être adaptées en fonction des applications souhaitées.

En variante, la membrane PEM 9 est remplacée par une membrane anionique. Dans ce cas, l'électrolyte est basique au lieu d'être acide. Les anions hydroxydes (HO⁻) traversent la membrane anionique. Les réactions chimiques dans les compartiments sont modifiées mais la structure et le fonctionnement de la pile 1 restent similaires.

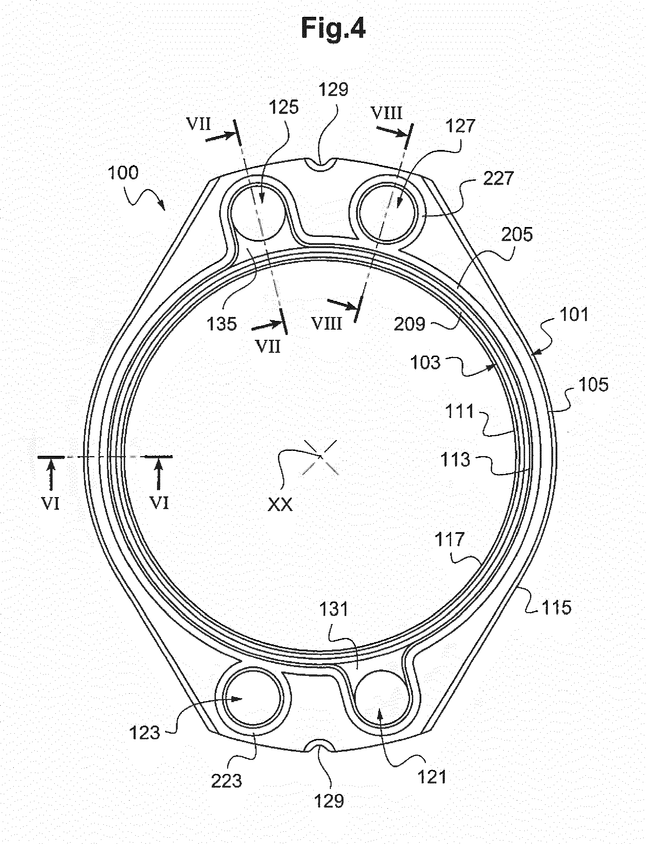

Les figures 4 à 9 représentent un mode de réalisation d'une entretoise 100, qui peut être utilisée dans des cellules 3 et une pile 1 telles que décrites jusqu'ici.

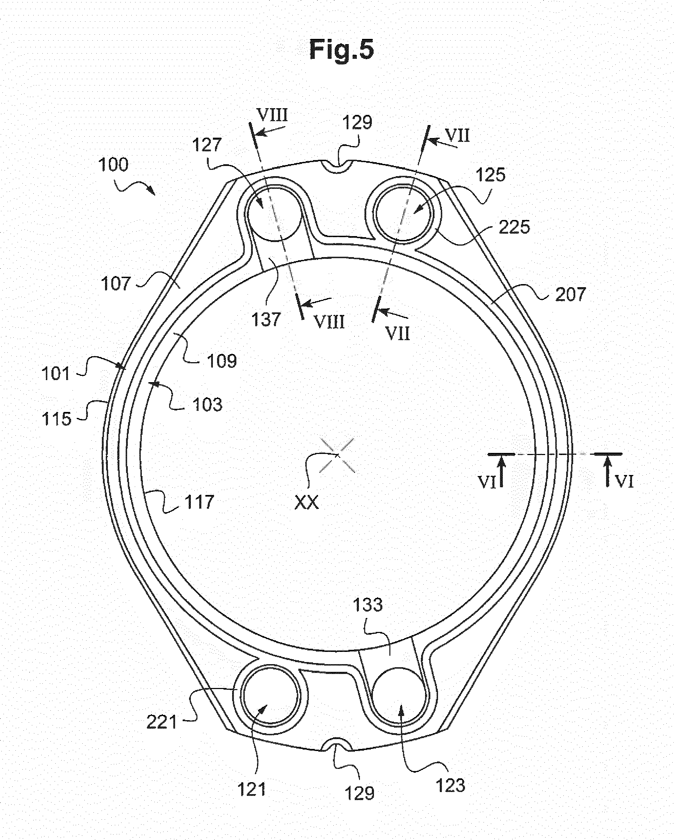

Il est d'abord fait référence aux figures 4 et 5. L'entretoise 100 est d'un seul tenant et de forme sensiblement annulaire. Dans l'exemple décrit ici, l'entretoise 100 présente une forme de couronne sensiblement plate : elle s'étend selon un plan principal, correspondant au plan des figures 4 et 5, et présente une direction d'épaisseur perpendiculaire au plan principal. À l'état empilé, la direction d'épaisseur de l'entretoise 100 est parallèle à la direction d'empilement XX. Les sections de l'entretoise 100 présentent, sur toute la circonférence de l'entretoise 100, une largeur sensiblement supérieure à son épaisseur.

L'entretoise 100 comprend une partie périphérique 101 et une partie interne 103. La partie interne 103 est en saillie de la partie périphérique 101 vers l'intérieur de la forme sensiblement annulaire.

La partie périphérique 101 présente une première face principale 105 et une seconde face principale 107 opposées l'une par rapport à l'autre et s'étendant à la perpendiculaire de la direction d'épaisseur de l'entretoise 100. La partie interne 103 présentant une face d'appui 109. La face d'appui 109 est, ici, sensiblement plane, annulaire et coplanaire avec la seconde face principale 107. La face d'appui 109 de la partie interne 103 est sensiblement dans le prolongement de la seconde face principale 107 de la partie périphérique 101. La partie interne 103 présente une face intermédiaire 111 opposée à la face d'appui 109. La face intermédiaire 111 est, ici, sensiblement plane, annulaire et en retrait par rapport à la première face principale 105 de la partie périphérique 101 selon la direction d'épaisseur. La face intermédiaire 111 s'étend selon un plan parallèle à la première face principale 105 et à la seconde face principale 107 et entre les deux faces principales 105, 107 de la partie périphérique 101. À l'état monté, la face intermédiaire 111 définit la position de la frontière entre le compartiment anodique 11 et le compartiment cathodique 13 et reçoit la membrane PEM 9.

Ainsi, la partie périphérique 101 et la partie interne 103 sont formées d'un seul tenant et reliées l'une à l'autre en formant un épaulement annulaire interne.

La partie périphérique 101 présente une épaisseur 200. L'épaisseur 200 est définie par la distance séparant les deux faces principales 105, 107 de la partie périphérique 101. L'épaisseur 200 correspond sensiblement à l'épaisseur hors-tout de l'entretoise 100. La partie interne 103 présente une épaisseur 201 définie par la distance séparant la face d'appui 109 et la face intermédiaire 111. L'épaisseur 201 de la partie interne 103 est strictement inférieure à l'épaisseur 200 de la partie périphérique 101. L'épaisseur 201 correspond sensiblement à l'épaisseur du compartiment cathodique 13. La différence entre l'épaisseur 200 de la partie périphérique 101 et l'épaisseur 201 de la partie interne 103 correspond sensiblement à l'épaisseur du compartiment anodique 11, à l'épaisseur de la membrane PEM 9 près.

La première face principale 105 de la partie périphérique 101 et la face intermédiaire 111 de la partie interne 103 sont reliées l'une à l'autre par l'intermédiaire d'une surface de raccord 113. La surface de raccord 113 est annulaire et sensiblement cylindrique. La hauteur de la surface de raccord 113 correspond à la différence entre l'épaisseur 200 de la partie périphérique 101 et l'épaisseur 201 de la partie interne 103. La surface de raccord 113 forme une partie anodique de la paroi externe 10 de la cellule 3 à l'état monté. Dans cet état, la surface de raccord 113 délimite le contour du compartiment anodique 11 de la cellule 3.

L'entretoise 100 présente en outre un bord externe 115 et un bord interne 117. Le bord externe 115 relie la première face principale 105 et la seconde face principale 107 de la partie périphérique 101 l'une à l'autre. Le bord externe 115 forme contour extérieur de la forme annulaire de l'entretoise 100. La hauteur du bord externe 115 correspond à l'épaisseur 200 de la partie périphérique 101. Le bord interne 117 relie la face d'appui 109 et la face intermédiaire 111 de la partie interne 103 l'une à l'autre. Le bord interne 117 s'étend sur le contour intérieur de la forme annulaire de l'entretoise 100. La hauteur du bord interne 117 correspond à l'épaisseur 201 de la partie interne 103. Ici, le bord interne 117 présente un diamètre d'environ 265 millimètres. Le bord interne 117 forme une partie cathodique de la paroi externe 10 de la cellule 3 à l'état monté. Dans cet état, le bord interne 117 délimite le contour du compartiment cathodique 13 de la cellule 3.

L'entretoise 100 présente un premier orifice 121, un second orifice 123, un troisième orifice 125 et un quatrième orifice 127. Les quatre orifices 121, 123, 125, 127 sont traversants dans la direction d'épaisseur. Le premier orifice 121 et le second orifice 123 sont sensiblement opposés diamétralement l'un par rapport à l'autre dans la forme annulaire de l'entretoise 100. Le troisième orifice 125 et le quatrième orifice 127 sont sensiblement opposés diamétralement l'un par rapport à l'autre dans la forme annulaire de l'entretoise 100. Les quatre orifices 121, 123, 125, 127 présentent chacun un contour fermé, ici circulaire. En fonctionnement, les quatre orifices 121, 123, 125, 127 permettent la circulation d'un fluide selon la direction d'épaisseur au travers de l'entretoise 100. À l'état monté de l'entretoise 100, les quatre orifices 121, 123, 125, 127 forment des portions respectivement du premier canal d'alimentation en eau 151, du second canal d'alimentation en eau 153, du canal d'évacuation de dioxygène (O₂) 155 et du canal d'évacuation de dihydrogène (H2) 157 de la pile 1.

Dans la continuité de l'orifice 121, respectivement 123, 125 et 127, l'entretoise 100 comprend un passage 131, respectivement 133, 135, 137. Le passage 131, respectivement 133, 135 et 137, s'étend entre l'orifice 121, respectivement 123, 125 et 127, et l'espace interne de l'entretoise 100, ici sensiblement selon une direction radiale. En fonctionnement, les fluides passent entre le canal 151, respectivement 153, 155 et 157, et l'espace intérieur de la cellule 3 via le passage 131, respectivement 133, 135 et 137. Ainsi, en fonctionnement, le passage 131, respectivement 133, 135 et 137, forme la première entrée d'eau 51 dans le compartiment anodique 11, respectivement la seconde entrée d'eau 53 dans le compartiment cathodique 13, respectivement la sortie 55 de dioxygène (O₂) depuis le compartiment anodique 11, respectivement la sortie 57 de dihydrogène (H2) depuis le compartiment cathodique 13. Ici, le passage 131, respectivement 133, 135 et 137, débouche sur le diffuseur 15.

Ici, les passages 131, 133, 135, 137 prennent la forme de rainures ménagées dans l'une des deux faces principales 105, 107, par exemple réalisées par retrait de matière. Les passages 131 et 135 sont ménagés côté anode, soit dans la première face principale 105 dans l'exemple des figures 4 et 5, tandis que les passages 133 et 137 sont ménagés côté cathode, soit dans la seconde face principale 107 dans l'exemple des figures 4 et 5. Ici, les bords des passages 131 et 135 côté anodique sont évasés. Ceci améliore l'homogénéité de la circulation de fluide dans le compartiment anodique 11. Les bords des passages 133, 137 côté cathodique sont droits. En variante, les bords côté anodique sont droits et/ou les bords côté cathodique sont évasés.

Dans le mode de réalisation décrit ici, les quatre orifices 121, 123, 125, 127 et leur passage 131, 133, 135, 137 respectif sont regroupés deux à deux dans la circonférence de l'entretoise 100. Les canaux 151, 153, 155, 157 pour les fluides dans un état assemblé de l'entretoise 100 sont ainsi à proximité deux à deux, ce qui réduit l'encombrement de la pile 1. En disposant la pile 1 de manière que la direction d'empilement XX soit sensiblement horizontale, les entrées 51 et 53 peuvent être disposées en bas tandis que les sorties 55 et 57 peuvent être disposées en haut. L'évacuation des gaz par les sorties 55 et 57 est facilitée par l'effet de la poussée d'Archimède. Cette disposition reste optionnelle : les orifices peuvent être répartis différemment dans l'entretoise 100.

L'entretoise 100 présente dans sa circonférence :
- deux portions courantes, dépourvues d'orifice, à gauche et à droite sur les figures 4 et 5, et
- deux portions de communication, dans lesquelles sont ménagés les quatre orifices 121, 123, 125, 127, en haut en bas sur les figures 4 et 5.

Les portions de communication sont élargies par rapport aux portions courantes. Sur les portions de communication, le bord externe 115 prend la forme de deux arcs de cercle d'environ 400 millimètres de diamètre. Sur les portions courantes, le bord externe 115 prend la forme de deux arcs de cercle d'environ 320 millimètres de diamètre. Les portions de communication et courantes sont reliées les unes aux autres de manière sensiblement continue. En outre, le bord externe 115 présente une encoche 129 sur chacune des deux portions de communication. Les encoches 129 présentent, ici, une forme de demi-cercle et sont agencées de manière à coopérer avec un guide d'une pile 1. Les encoches 129 facilitent l'indexation des entretoises 100 au cours du montage de la pile 1 et améliorent leur maintien par une structure externe. En variante, d'autres moyens de guidage et de fixation sont prévus.

Dans l'exemple décrit ici, l'entretoise 100 comprend une âme et une enveloppe recouvrant au moins en partie l'âme.

L'âme est réalisée à base de métal, par exemple de l'acier inoxydable. L'enveloppe présente, ici, une composition à base d'éthylène-propylène-diène monomère (EPDM). La composition de l'enveloppe présente une élasticité supérieure à celle de la composition de l'âme. L'EPDM utilisé ici permet d'obtenir des propriétés mécaniques, et en particulier une tenue à des températures extrêmes, améliorées par rapport à d'autres élastomères. L'utilisation d'EPDM plutôt que d'autres élastomères reste optionnelle. Par exemple, des fluoropolymères (FKM), des silicones (VMQ), des éthylènes-acétate de vinyle (EVA et EVM) et des polyéthylènes chlorés (CM) peuvent être utilisés en fonction des applications souhaitées. Dans l'exemple décrit ici, l'enveloppe est adhérisée sur l'âme. L'entretoise 100 est obtenue par injection du matériau constituant l'enveloppe au contact de l'âme.

L'enveloppe est présente au moins sur chacune des surfaces de l'âme qui doivent être isolées électriquement en fonctionnement. L'enveloppe, électriquement isolante, recouvre l'âme au moins sur les zones de l'entretoise 100 en contact avec l'espace interne de la cellule 3 à l'état monté. La dégradation chimique de l'âme par les fluides de la cellule 3 est limitée. Dans l'exemple représenté aux figures 4 à 8, l'enveloppe recouvre l'âme, de manière continue, et sur toute les surfaces à l'exception du bord externe 115 et de zones de la première surface principale 105 et de la seconde face principale 107 situées le long du bord externe 115 et des encoches 129.

Les surfaces non revêtues de l'âme permettent de faciliter la fabrication de l'entretoise 100, d'économiser de la matière et de guider et aligner avec précision les pièces lors du montage de la pile 1.

La cellule 3 comprend en outre des joints agencés de manière à empêcher les fuites de fluides entre les pièces formant la cellule 3. Dans l'exemple décrit ici, les joints, ou lignes d'étanchéité, sont formés de nervures, ou surépaisseurs locales, formées dans l'enveloppe 163. Ainsi, l'entretoise 100, d'une seule pièce, assure à la fois une fonction structurelle en délimitant les compartiments 11, 13 de la cellule 3, une fonction d'isolation électrique et une fonction d'étanchéité. L'ajout de pièces supplémentaires d'étanchéité est superflu. En variante, certains au moins des joints sont formés par des pièces distinctes de l'entretoise 100. Par exemple, des pièces déformables à base d'élastomère du type jonc ou boudin sont disposées entre des pièces sensiblement indéformables. Autrement dit, certaines au moins des nervures représentées sur les figures peuvent être remplacées par des joints qui ne sont pas d'un seul tenant avec l'entretoise 100.

Sur les figures 4 et 5, les joints sont représentés par des traits épais. Dans l'exemple décrit ici, l'entretoise 100 comprend :
- une ligne d'étanchéité anodique 205 s'étendant sur la première face principale 105 et définissant un contour continu et fermé entourant à la fois la surface de raccord 113, l'orifice 121 et l'orifice 125 ;
- une ligne d'étanchéité cathodique 207 s'étendant sur la seconde face principale 107 et définissant un contour continu et fermé entourant à la fois le bord interne 117, l'orifice 123 et l'orifice 127 ;
- une ligne d'étanchéité intermédiaire 209 s'étendant sur la face intermédiaire 111 et définissant un contour continu et fermé entourant le bord interne 117 ;
- des lignes d'étanchéité de contour d'orifice 223 et 227 s'étendant sur la première face principale 105 et définissant un contour continu et fermé entourant respectivement l'orifice 123 et l'orifice 127 ;
- des lignes d'étanchéité de contour d'orifice 221 et 225 s'étendant sur la seconde face principale 107 et définissant un contour continu et fermé entourant respectivement l'orifice 121 et l'orifice 125.

À l'état monté de l'entretoise 100, la ligne d'étanchéité anodique 205 est disposée entre la première face principale 105 et l'anode 5 selon la direction d'empilement XX en assurant l'étanchéité du compartiment anodique 11 par rapport à l'extérieur. La communication fluidique est préservée sensiblement selon une direction radiale entre le compartiment anodique 11 et l'orifice 121, respectivement l'orifice 125, via le passage131, respectivement le passage 135. La ligne d'étanchéité cathodique 207 est disposée entre la seconde face principale 107 et la cathode 7 selon la direction d'empilement XX en assurant l'étanchéité du compartiment cathodique 13 par rapport à l'extérieur. La communication fluidique est préservée sensiblement selon une direction radiale entre le compartiment cathodique 13 et l'orifice 123, respectivement l'orifice 127, via le passage 133, respectivement le passage 137. La ligne d'étanchéité intermédiaire 209 est disposée entre la face intermédiaire 111 et la membrane PEM 9 selon la direction d'empilement XX en assurant l'étanchéité fluidique du compartiment anodique 11 et du compartiment cathodique 13 l'un par rapport à l'autre.

Les lignes d'étanchéité de contour d'orifice 223 et 227 sont disposées entre la première face principale 105 et l'anode 5 tandis que les lignes d'étanchéité de contour d'orifice 221 et 225 sont disposées entre la seconde face principale 107 et la cathode 7. La ligne d'étanchéité de contour d'orifice 221, respectivement 223, 225 et 227, assure l'étanchéité par rapport à l'extérieur du canal 151, respectivement 153, 155 et 157, formé par l'alignement des orifices 121, respectivement 123, 125 et 127, de chacune des cellules 3 d'une pile 1. Comme cela apparaît sur les figures, la ligne d'étanchéité anodique 205 se confond localement avec les lignes d'étanchéité de contour d'orifice 223 et 227 tandis que la ligne d'étanchéité cathodique 207 se confond localement avec les lignes d'étanchéité de contour d'orifice 221 et 225.

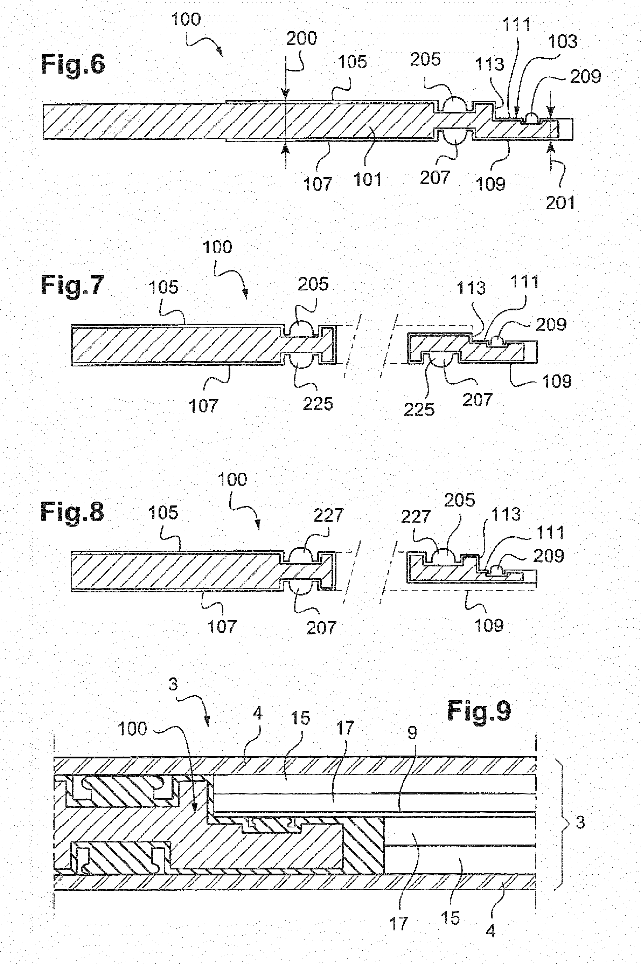

Comme cela apparaît sur les figures 6 à 9, chaque nervure conformée dans l'enveloppe est logée en partie dans une rainure correspondante ménagée dans l'âme. Dans l'exemple décrit ici, chacune des nervures présente une section de forme sensiblement symétrique, ici semi-circulaire. En variante, d'autres formes de section sont mises en œuvre. Les rainures peuvent, par exemple, présenter une section arrondie. Les nervures peuvent présenter des sections sensiblement carrées, rectangulaires, trapézoïdales, ou encore pointues ou écrêtées, ou même asymétriques.

Au repos, les nervures font saillie de la première face principale 105, respectivement de la seconde face principale 107, de la face d'appui 109 et de la face intermédiaire 111. À l'état serré de la pile 1, tel que représenté par exemple en figure 9, les nervures sont comprimées selon la direction d'empilement XX et présentent une expansion sensiblement dans les directions perpendiculaires à la direction d'empilement XX, ici dans les rainures ménagées dans l'âme. Par l'effet du retour élastique, les nervures s'appliquent contre les pièces en regard et assurent ainsi les étanchéités. En variante, la présence des rainures est combinée avec des joints distincts de l'entretoise 100. Les rainures réduisent les risques que les lignes d'étanchéité soient mal positionnées ou détériorées. Dans l'exemple décrit ici, à l'état en service et donc à l'état comprimé des nervures, la hauteur d'une nervure est réduite de 10% à 40% par rapport à la hauteur au repos de cette même nervure. En outre, les dimensions des rainures sont sélectionnées de sorte que, la portion du volume des rainures ménagées dans l'âme occupé par la matière des nervures est inférieur à 90%.

Dans l'exemple décrit ici, l'enveloppe présente une épaisseur sensiblement homogène autour de l'âme à l'exception des nervures qui forment des surépaisseurs locales de l'enveloppe. Dans l'exemple décrit ici, l'épaisseur de l'enveloppe hors zones d'exception est supérieure à 0,3 millimètre. Outre les nervures, la partie de l'enveloppe recouvrant l'âme sur le bord interne 117 constitue aussi une exception à l'homogénéité de l'épaisseur. La partie de l'enveloppe recouvrant le bord interne 117 présente ainsi une épaisseur supérieure à celle de l'enveloppe dans les autres zones de l'entretoise 100. Cette différence d'épaisseur résulte de l'opération de moulage par injection de l'enveloppe. En variante, cette surépaisseur est omise.

À l'état serré selon la direction d'empilement XX, le compartiment anodique 11 et le compartiment cathodique 13 peuvent être soumis à des pressions de fonctionnement différentes. Dans l'exemple décrit ici, le compartiment anodique 11 fonctionne à une pression statique sensiblement inférieure à celle du compartiment cathodique 13. Ainsi, la différence de pression participe à un serrage uniforme de la membrane PEM 9 contre le collecteur 17 disposé dans le compartiment anodique 11. Autrement dit, la membrane PEM 9 est maintenue à plat et de manière sensiblement homogène sur toute sa surface contre le collecteur 17 anodique. L'étanchéité est renforcée. La membrane PEM 9 est peu ou pas sollicitée en traction. Les risques de déformation par traction et/ou cisaillement de la membrane PEM 9 sont réduits. L'intégrité de la membrane PEM 9 est préservée. À des pressions de fonctionnement équivalentes à celles des piles connues, une membrane PEM 9 de plus faible épaisseur peut être utilisée, ce qui améliore l'efficacité énergétique de la cellule 3 et réduit le coût de la membrane PEM 9.

Le serrage de la membrane PEM 9 contre la ligne d'étanchéité intermédiaire 209 est assuré par le serrage de la plaque bipolaire 4 formant anode 5 vers l'entretoise 100 selon la direction d'empilement XX et par l'intermédiaire du diffuseur 15 et du collecteur 17 du côté anodique.

En comparaison des assemblages existants dans lesquels la membrane PEM 9 est pincée sur sa périphérie entre deux pièces similaires, par exemple celles décrites dans WO 2015/004378, les assemblages décrits ici nécessitent des seuils de serrage inférieurs pour fonctionner. De tels assemblages présentent des tolérances sur les épaisseurs des diffuseurs 15 et des collecteurs 17 plus importantes. Pour une surface utile dans les échanges électrochimiques de la membrane PEM 9 équivalente à celle des piles connues, ici la surface totale de la membrane PEM 9 est réduit.

Des essais sur les joints représentés sur les figures ont été menés. Des piles comprenant au moins 100 cellules, voire au moins 150, 200 ou même 300 cellules résistent en épreuve à des pressions d'environ 100 bars dans le compartiment anodique pour environ 60 bars dans le compartiment cathodique et ce sous un serrage selon la direction d'empilement XX d'environ 1 000 à 3 000 daN. La différence de pression en épreuve entre les deux compartiments était donc de 40 bars. En service, il est prévu une différence de 30 bars entre les deux compartiments (75 bars et 45 bars dans l'un et l'autre des compartiments).

L'invention ne se limite pas aux exemples d'entretoises, de cellules et de piles décrits ci-avant, seulement à titre d'exemples, mais elle englobe toutes les variantes que pourra envisager l'homme de l'art dans le cadre des revendications ci-après. Notamment, les exemples de dimensions nominales pourront être adaptés en fonction des applications prévues.

## Revendications

1. Entretoise (100) pour une cellule (3) d'électrolyseur, de forme sensiblement annulaire et comprenant :
une partie périphérique (101) présentant deux faces principales (105, 107) parallèles et opposées l'une par rapport à l'autre, la distance séparant les deux faces principales (105, 107) définissant une épaisseur (200) de l'entretoise (100), et
une partie interne (103) présentant une épaisseur (201) strictement inférieure à l'épaisseur (200) de l'entretoise (100),
la partie périphérique (101) et la partie interne (103) étant d'un seul tenant et reliées l'une à l'autre en formant un épaulement annulaire interne de sorte que la partie interne (103) présente une face intermédiaire (111) sensiblement annulaire et s'étendant selon un plan parallèle aux deux faces principales (105, 107) de la partie périphérique (101) et situé entre les deux faces principales (105, 107), **caractérisé en ce que** :
l'entretoise (100) comprend une âme métallique et une enveloppe électriquement isolante recouvrant l'âme au moins sur les zones de l'entretoise (100) en contact avec un espace interne de la cellule (3) d'électrolyseur à l'état monté,
au moins une rainure est ménagée dans l'âme, s'étendant sensiblement selon la circonférence de l'entretoise (100), et dans l'une au moins parmi les deux faces principales (105, 107) et la face intermédiaire (111), l'au moins une rainure formant logement pour une ligne d'étanchéité (205, 207, 209) à l'état monté de l'entretoise (100),
et l'enveloppe présente au moins une nervure, s'étendant sensiblement selon la circonférence de l'entretoise (100), et faisant saillie, à l'état au repos de l'entretoise (100), de l'une au moins parmi les deux faces principales (105, 107) et la face intermédiaire (111), l'au moins une nervure formant ligne d'étanchéité (205, 207, 209) à l'état monté de l'entretoise (100),
chaque nervure étant logée en partie dans une rainure correspondante.

2. Entretoise (100) selon la revendication 1, dans laquelle la partie interne (103) présente en outre une face d'appui (109) sensiblement plane, annulaire et coplanaire avec l'une (107) des deux faces principales (105, 107) de la partie périphérique (101).

3. Cellule (3) d'électrolyse comprenant deux électrodes (5, 7) sensiblement planes et parallèles l'une par rapport à l'autre, une membrane (9) et une entretoise (100) entre les deux électrodes (5, 7) selon une direction d'empilement (XX),
l'entretoise (100) étant selon l'une des revendications 1 ou 2,
les deux électrodes (5, 7) et l'entretoise (100) délimitant ensemble un espace interne de la cellule (3), les deux faces principales (105, 107) de l'entretoise (100) étant en appui respectif contre l'une et l'autre des deux électrodes (5, 7),
l'épaisseur (200) de l'entretoise (100) correspondant à l'épaisseur de l'espace interne de la cellule (3) selon la direction d'empilement (XX),
la face intermédiaire (111) de l'entretoise (100) étant en regard et à distance de l'une (7) des deux électrodes (5, 7), la face intermédiaire (111) supportant la membrane (9) de sorte que la membrane (9) divise l'espace interne de la cellule (3) en deux compartiments (11, 13).

## Patentansprüche

1. Abstandhalter (100) für eine Elektrolysezelle (3), im Wesentlichen ringförmig und Folgendes umfassend:
einen Umfangsabschnitt (101) mit zwei Hauptflächen (105, 107), die parallel und gegenüberliegend angeordnet sind, wobei der Abstand, der die beiden Hauptflächen (105, 107) voneinander trennt, eine Dicke (200) des Abstandhalters (100) definiert, und
einen Innenabschnitt (103) mit einer Dicke (201), streng unterhalb der Dicke (200) des Abstandhalters (100),
wobei der Umfangsabschnitt (101) und der Innenabschnitt (103) aus einem Stück sind und miteinander verbunden sind, einen inneren Flanschring formend, so dass der Innenabschnitt (103) eine im Wesentlichen ringförmige Zwischenfläche (111) aufweist, die sich in einer Ebene, parallel zu den beiden Hauptflächen (105, 107) des Umfangsabschnitts (101) erstreckt und zwischen den beiden Hauptflächen (105, 107) liegt, **dadurch gekennzeichnet, dass**:
der Abstandhalter (100) einen Metallkern und eine elektrisch isolierende Ummantelung umfasst, die den Kern mindesten über die Bereiche des Abstandhalters (100) umhüllt, die im montierten Zustand in Kontakt mit einem Innenraum der Elektrolysezelle (3) sind,
mindestens eine Nut in dem Kern ausgebildet ist, die sich im Wesentlichen über den Umfang des Abstandhalters (100), und in mindestens einer der beiden Hauptflächen (105, 107) und der Zwischenfläche (111) erstreckt, wobei die mindestens eine Nut eine Aufnahme für eine Dichtlinie (205, 207, 209) im montierten Zustand des Abstandhalters (100) bildet,
und die Ummantelung mindestens eine Rippe aufweist, die sich im Wesentlichen über den Umfang des Abstandhalters (100) erstreckt, und in einem Ruhezustand des Abstandhalters (100) von mindestens einem der beiden Hauptflächen (105, 107) und der Zwischenfläche (111) hervorsteht, wobei die mindestens eine Rippe eine Dichtlinie (205, 207, 209) im montierten Zustand des Abstandhalters (100) bildet,
wobei jede Rippe teilweise in einer entsprechenden Nut untergebracht ist.

2. Abstandhalter (100) nach Anspruch 1, wobei der Innenabschnitt (103) ferner eine im Wesentlichen plane Auflagefläche (109), ringförmig und koplanar mit einer (107) der beiden Hauptflächen (105, 107) des Umfangsabschnitts (101) aufweist.

3. Elektrolysezelle (3) umfassend zwei im Wesentlichen plane und zueinander parallel angeordnete Elektroden (5, 7), eine Membran (9) und einen Abstandhalter (100) zwischen den beiden Elektroden (5, 7) in Stapelrichtung (XX),
wobei der Abstandhalter (100) nach einem der Ansprüche 1 oder 2 ausgebildet ist,
die beiden Elektroden (5, 7) und der Abstandhalter (100) zusammen einen Innenraum der Zelle (3) begrenzen, die beiden Hauptflächen (105, 107) des Abstandhalters (100) gegen einen jeweiligen der beiden Elektroden (5, 7) abstützen,
die Dicke (200) des Abstandhalters (100) der Dicke des Innenraums der Zelle (3) in Stapelrichtung (XX) entspricht,
die Zwischenfläche (111) des Abstandhalters (100) gegenüber und beabstandet von einer (7) der beiden Elektroden (5, 7) angeordnet ist, wobei die Zwischenfläche (111) die Membran (9) unterstützt, so dass die Membran (9) den Innenraum der Zelle (3) in zwei Bereiche (11, 13) aufteilt.

## Claims

1. Spacer (100) for an electrolyzer cell (3) of substantially annular shape and comprising:
a peripheral part (101) having two parallel principal faces (105, 107) opposite each other, the distance separating the two principal faces (105, 107) defining a thickness (200) of the spacer (100), and
an internal part (103) having a thickness (201) strictly less than the thickness (200) of the spacer (100),
the peripheral part (101) and the internal part (103) being in one piece and connected to each other forming an internal annular shoulder so that the internal part (103) has a substantially annular intermediate face (111) extending in a plane parallel to the two principal faces (105, 107) of the peripheral part (101) and situated between the two principal faces (105, 107), **characterized in that**:
the spacer comprises a metal core (161) and an electrically insulative envelope (163) covering the core (161) at least over the areas of the spacer (100) in contact with an internal space of the electrolyzer cell (3) in the assembled state,
at least one groove is formed in the core (161), extending substantially along the circumference of the spacer (100), and in at least one of the two principal faces (105, 107) and the intermediate face (111), the at least one groove forming a housing for a sealing line (205, 207, 209) in the assembled state of the spacer (100),
and the envelope (201) includes at least one rib, extending substantially along the circumference of the spacer (100), and, in the rest state of the spacer (100), protruding from at least one of the two principal faces (105, 107) and the intermediate face (111), the at least one rib forming a sealing line (205, 207, 209) in the assembled state of the spacer (100),
each rib being received in part in a corresponding groove.

2. Spacer (100) according to Claim 1, wherein the internal part (103) further includes a substantially plane annular bearing face (109) coplanar with one face (107) of the two principal faces (105, 107) of the peripheral part (101).

3. Electrolysis cell (3) comprising two substantially plane electrodes (5, 7) parallel to each other, a membrane (9) and a substantially annular part forming a spacer (100) between the two electrodes (5, 7) in a stacking direction (XX),
the spacer (100) being according to one of claims 1 or 2,
the two electrodes (5, 7) and the spacer (100) together delimiting an internal space of the cell (3), the two principal faces (105, 107) of the spacer (100) respectively bearing against the one and the other of the two electrodes (5, 7),
the thickness (200) the spacer (100) corresponding to the thickness of the internal space of the cell (3) in the stacking direction (XX),
the intermediate face (111) facing and at a distance from one electrode (7) of the two electrodes (5, 7), the intermediate face (111) supporting the membrane (9) so that the membrane (9) divides the internal space of the cell (3) into two compartments (11, 13).
